# FASCICULE DE BREVET EUROPEEN

(11) **EP 3 180 234 B1**
(45) Date de publication et mention de la délivrance du brevet: **15.09.2021**
(21) Numéro de dépôt: 15754270.5
(22) Date de dépôt: 17.07.2015
(51) Int. Cl.: B62D 25/16, B62D 25/18, B62D 35/02

(54) **STRUCTURE D'AILE D'UN VEHICULE AUTOMOBILE A PARE-BOUE POURVU D'UNE ECOPE D'EVACUATION D'EAU**
STRUKTUR EINES KRAFTFAHRZEUGFLÜGELS MIT EINEM KOTFLÜGEL MIT EINER WASSERABLEITUNGSSCHAUFEL
STRUCTURE OF A MOTOR VEHICLE WING HAVING A MUDGUARD PROVIDED WITH A WATER DISCHARGE SCOOP

(30) Priorité: 14.08.2014 FR 1457814
(43) Date de publication de la demande: 21.06.2017
(73) Titulaire: PSA Automobiles SA, 78300 Poissy (FR)
(72) Inventeur: BESSAULT, Jean Christophe, F-25310 Herimoncourt (FR)
(86) Numéro de dépôt international: PCT/FR2015/051984
(87) Numéro de publication internationale: WO 2016/024054

(56) Documents cités:
- WO-A1-2014/156525
- FR-A1- 2 990 402
- JP-A- 2013 023 007
- None

## Description

La présente invention concerne d'une manière générale une structure d'aile d'un véhicule automobile.

Une structure d'aile avant ou arrière d'un véhicule automobile délimite un passage de roue dans lequel est fixé un pare-boue dont le galbe est sensiblement parallèle à la roue.

Un tel pare-boue tel que divulgué dans la document FR-A1-2 990 402, permet d'expulser l'eau drainée du passage de roue pendant le déplacement du véhicule.

Cependant, lors d'un passage du véhicule dans un gué, le niveau d'eau monte dans le passage de roue, provoquant progressivement une montée en pression de l'eau dans ce passage de roue avec création d'une surpression pouvant provoquer un étirement ou un déchaussement du pare-boue de l'aile voire même une détérioration de celui-ci.

La présente invention a pour but de palier l'inconvénient ci-dessus en proposant une solution permettant d'éviter les surpressions dans les passages de roues d'un véhicule circulant notamment dans un gué.

A cet effet, selon l'invention, la structure d"aile d'un véhicule, tel qu'un véhicule automobile, délimitant un passage de roue dans lequel est fixé un pare-boue dont le galbe est sensiblement parallèle à la roue, est caractérisée en ce que le pare-boue comprend à la partie inférieure arrière du galbe une écope conformée pour créer une zone d'évacuation d'eau ou d'air de surpression dans le passage de roue en arrière du pare-boue sous le soubassement du véhicule.

De préférence, l'écope s'étend à partir du flanc intérieur du pneumatique de la roue du véhicule suivant une direction générale sensiblement perpendiculaire à ce flanc intérieur.

Avantageusement, l'écope comprend une paroi plane inclinée vers l'arrière du véhicule et vers le bas d'un angle aigu relativement à un plan vertical perpendiculaire au flanc intérieur du pneumatique de la roue du véhicule et deux parois latérales raccordées à la paroi plane arrière pour définir avec cette dernière une forme sensiblement en U débouchant vers le bas.

De préférence, les deux parois latérales divergent l'une de l'autre à partir de la paroi plane.

La paroi plane inclinée de l'écope a son bord inférieur sensiblement horizontal en s'étendant suivant une direction sensiblement perpendiculaire au flanc du pneumatique de la roue du véhicule et son bord supérieur incliné de bas en haut à partir de ce flanc

Le pare-boue est réalisé en un matériau souple élastomère à base de polypropylène ou à base de polypropylène et de caoutchouc éthylène-propylène-diène, permettant à l'écope de se déformer élastiquement pour venir en appui sur une partie environnante de la caisse du véhicule en cas de surpression élevée d'air ou d'eau dans le passage de roue.

L'invention vise également un pare-boue pour véhicule, tel qu'un véhicule automobile, destiné à être fixé dans un passage de roue délimité dans une structure d'aile du véhicule, le pare-boue comprenant une paroi généralement semi-cylindrique, et comprend
à l'une de ses parties d'extrémité une écope conformée pour assurer l'évacuation d'eau ou d'air lorsque le pare-boue est fixé dans le passage de roue, caractérisé en ce que le pare-boue est réalisé en un matériau souple élastomère à base de polypropylène ou à base de polypropylène et de caoutchouc éthylène-propylène-diène, permettent à l'écope de se déformer élastiquement.

De préférence, l'écope comprend une paroi plane inclinée extérieurement d'un angle aigu relativement à la partie extrémité de la paroi du pare-boue et délimitant un bord de cette partie d'extrémité, et deux parois latérales raccordées à la paroi plane inclinée pour définir avec cette dernière une forme générale en U.

Les deux parois latérales divergent l'une de l'autre à partir de la paroi plane.

Le bord de la paroi plane inclinée de l'écope s'étend suivant une direction sensiblement perpendiculaire à un plan traversant la paroi semi-cylindrique du pare-boue perpendiculairement aux deux parois d'extrémités, l'écope comporte un bord opposé incliné de bas en haut à partir de ce plan et est réalisée en un matériau souple élastomère à base de polypropylène ou à base de polypropylène et de caoutchouc éthylène-propylène-diène.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective d'une partie de la structure d'aile avant droite d'un véhicule automobile pourvue d'un pare-boue conforme à l'invention,
- la figure 2 est une vue en perspective du pare-boue de l'invention représenté en figure 1,
- la figure 3 est une vue arrière en perspective du pare-boue de la figure 2,
- la figure 4 est une vue partielle en perspective de face de la figure 1 sans l'aile avant,
- la figure 5 est une vue en coupe suivant la ligne V-V de la figure 4, et
- la figure 6 est une vue en coupe suivant la ligne VI-VI de la figure 5.

En se reportant aux figures, la référence 1 désigne la partie avant d'un véhicule automobile comprenant un pare-chocs 2 qui relie les ailes avant gauche et droite du véhicule, seule l'aile avant droite étant représentée par la référence 3.

La partie intérieure de l'aile avant 3 ainsi qu'une partie arrière du pare-chocs 2 sont disposées au regard de la roue avant droite 4 du véhicule avec le galbe de la partie intérieure de l'aile avant 3 qui est sensiblement parallèle à la roue 4.

Le pare-chocs 2 et l'aile avant 3 délimitent une partie extérieure d'un passage de roue 5, dont la partie intérieure est délimitée par un pare-boue 6 fixé dans le passage de roue 5 et dont le galbe est sensiblement parallèle à la roue 4.

En variante, l'aile avant 3 peut s'étendre en avant du véhicule à un niveau plus bas de manière à délimiter pratiquement à elle seule le passage de roue 5 dans lequel est fixé le pare-boue 6.

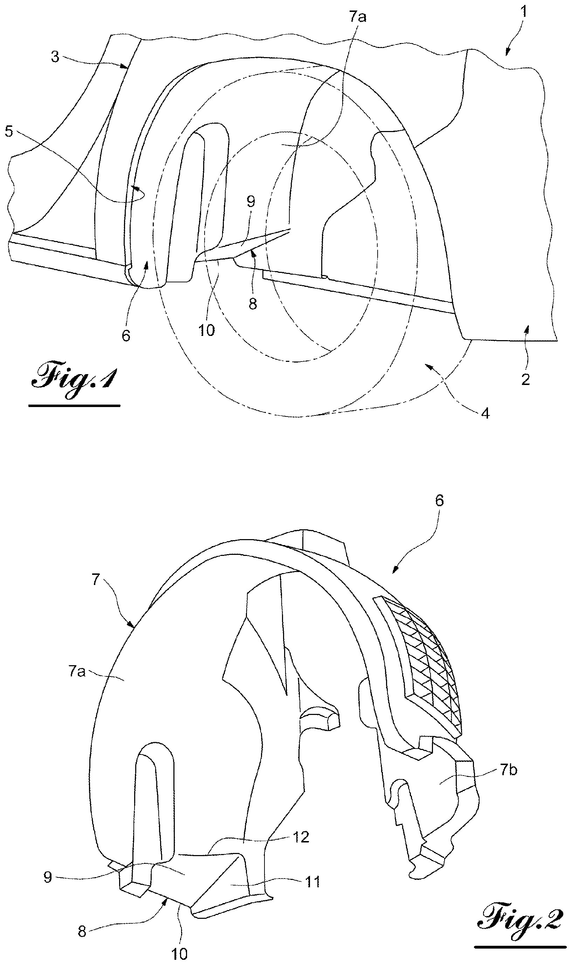

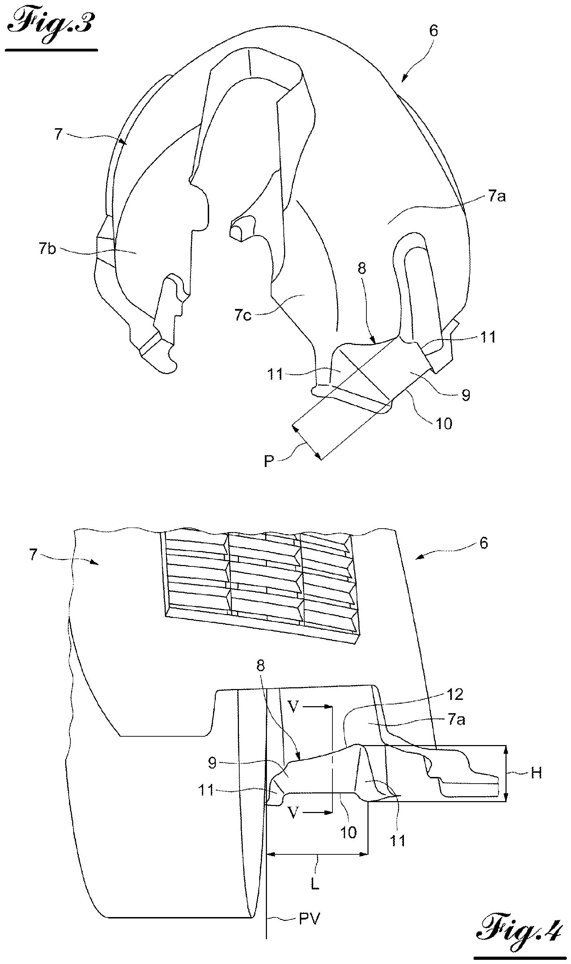

La structure du pare- boue 6 de l'invention est mieux représentée aux figures 2 et 3 et comprend une paroi 7 présentant une forme générale semi-cylindrique comportant à l'une 7a de ses parties d'extrémités inférieures 7a, 7b une écope 8 conformée pour assurer l'évacuation d'eau et, le cas échéant, d'air, lorsque le pare-boue 6 est fixé dans le passage de roue 5 comme on le verra ultérieurement.

L'écope 8 comprend, en saillie à l'extérieur de la paroi 7, une paroi plane 9 inclinée vers le bas d'un angle aigu relativement à la partie d'extrémité correspondante 7a de la paroi 7 et délimitant un bord inférieur 10 de cette partie d'extrémité.

L'écope 8 comprend en outre deux parois latérales 11 raccordées à la paroi plane 9 pour définir en section avec cette dernière une forme générale en U, dont les parois latérales 11, de préférence, divergent l'une de l'autre à partir de la paroi plane 9.

Ainsi, l'écope 8 débouche vers l'intérieur de la paroi 7 du pare-boue 6 et s'étend en arrière de la partie d'extrémité 7a de la paroi 7 d'une profondeur P.

L'une des parois latérales 11 de l'écope 8 est située sensiblement au niveau de l'un 7c des côtés externes de la paroi 7 du pare-boue 6 tandis que l'autre paroi latérale 11 est située sensiblement au milieu de la partie d'extrémité 7a de la paroi 7.

Le bord 10 de la paroi plane inclinée 9 s'étend suivant une direction sensiblement perpendiculaire à un plan traversant la paroi semi-cylindrique 7 du pare-boue 6 perpendiculairement à ses deux parties d'extrémités 7a, 7b. En outre, l'écope 8 comporte un bord supérieur 12 opposé au bord inférieur 10 et qui est incliné de bas en haut à partir de ce plan, c'est à dire à partir de la paroi latérale 11 de l'écope 8 située au milieu de la partie d'extrémité 7a de la paroi 7 vers l'autre paroi latérale 11 située côté externe 7c de la paroi 7.

De préférence, le matériau constituant le pare-boue 6 est réalisé en un matériau souple élastomère à base de polypropylène ou à base de polypropylène (PP) et de caoutchouc éthylène-propylène-diène (PP+EPDM)

La description ci-dessus du pare-boue 6 va être complétée en liaison avec sa position montée dans le passage de roue 5 comme cela est représenté aux figures 1, 4 - 6.

Ainsi, à la position montée du pare-boue 6 dans le passage de roue 5 du véhicule, l'écope 8 du pare-boue 6 est située à la partie d'extrémité inférieure arrière 7a de la paroi semi-cylindrique 7 de l'écope 8 qui s'étend, à partir du plan vertical PV contenant le flanc intérieur du pneumatique de la roue 4, suivant une direction générale sensiblement perpendiculaire à ce flanc.

En outre, la paroi plane 9 de l'écope 8 est inclinée vers l'arrière du véhicule à partir de la partie d'extrémité 7a de la paroi semi-cylindrique 7 et s'étend vers le bas d'un angle aigue a, par exemple d'environ 60°, relativement à un plan vertical s'étendant perpendiculairement au plan PV et la forme sensiblement en U définie par la paroi plane 9 et les parois latérales 11 de l'écope 8 débouche vers le bas.

Enfin, le bord inférieur 10 de la paroi plane inclinée 9 de l'écope 8 est sensiblement horizontal en s'étendant suivant une direction sensiblement perpendiculaire au plan PV contenant le flanc intérieur du pneumatique de la roue 4, tandis que le bord supérieur 12, qui est opposé au bord inférieur 10, est incliné de bas en haut à partir du plan PV pour présenter la hauteur H de l'écope 8 qui présente également une largeur L à partir de ce plan comme visible en figure 4. Autrement dit, la paroi latérale 11 de l'écope 8 située côté flanc intérieur du pneumatique a une hauteur plus faible que celle de la paroi latérale opposée 11.

A titre d'exemple non limitatif, la hauteur H de l'écope 8 varie entre 50 mm et 150 mm et la profondeur P est supérieure à 50 mm. Quant à la largeur L de l'écope 8, elle est définie par le flanc inférieur jusqu'à la structure du passage de roue par rapport au berceau du véhicule.

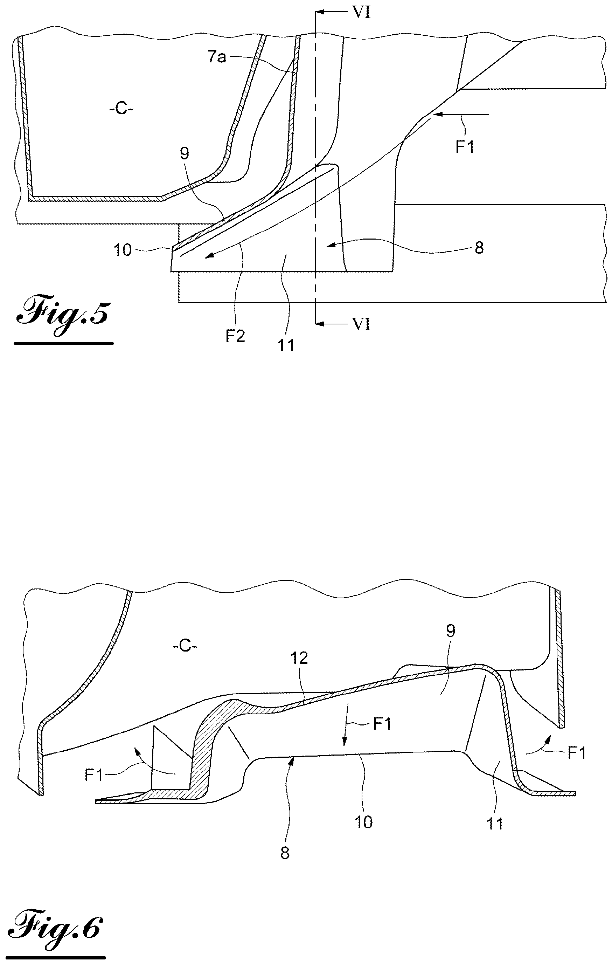

Lors d'un passage du véhicule dans un gué, le niveau d'eau monte dans le passage de roue 5 et entre progressivement en pression dans ce passage. L'écope 8 en partie arrière du pare-boue 6 permet de créer une zone d'évacuation d'eau de surpression dans le passage de roue 5 en arrière de ce pare-boue dans le soubassement du véhicule, de préférence sous le compartiment moteur de ce dernier, pour éviter de la sorte les surpressions d'eau dans le passage de roue 5. Les figures 5 et 6 symbolisent par les flèches F1 la direction des efforts de l'eau sous-pression appliqués sur l'écope 8 et qui, grâce à la souplesse du pare-boue 6, permettent de le déformer élastiquement de manière que ses parties latérales de la paroi 11 viennent en appui sur la structure de carrosserie environnante C du véhicule tout en permettant à la paroi inclinée 9 et aux parois latérales 11 de diriger suivant la trajectoire symbolisée par la flèche F2 l'eau sous pression au travers de l'écope 8 pour faciliter l'extraction de l'eau du pare-boue 6 et la diriger en arrière de ce pare-boue sous le soubassement du véhicule. Il est en outre à noter que de par sa profondeur P, l'écope 8 participe également à la rigidité de la partie inférieure arrière du pare-boue 6.

Ainsi, la présence de l'écope à la partie arrière du pare-boue 6 de l'invention permet d'éviter tout étirement, déchaussage et/ou risque de casse de ce pare-boue pouvant se produire lors des efforts appliqués sur un pare-boue traditionnel par l'eau sous-pression présente dans le passage de roue de chaque structure d'aile avant et/ou arrière du véhicule.

Le pare-boue conforme à l'invention au lieu de s'appliquer à l'eau sous-pression dans chaque passage de roue d'un véhicule peut également s'appliquer à l'air sous-pression dans une moindre mesure, pour permettre une trajectoire plus fluide et directe à l'air sous-pression sous le soubassement du véhicule.

## Revendications

1. Structure d'aile d'un véhicule, tel qu'un véhicule automobile, délimitant un passage de roue (5) dans lequel est fixé un pare-boue (6) dont le galbe est sensiblement parallèle à la roue (4), le pare-boue (6) comprenant à la partie inférieure arrière (7a) du galbe une écope (8) conformée pour créer une zone d'évacuation d'eau ou d'air de surpression dans le passage de roue (5) en arrière du pare-boue (6) sous le soubassement du véhicule, **caractérisée en ce que** le pare-boue (6) est réalisé en un matériau souple élastomère à base de polypropylène ou à base de polypropylène et de caoutchouc éthylène-propylène-diène, permettant à l'écope (8) de se déformer élastiquement pour venir en appui sur une partie environnante de la caisse du véhicule en cas de surpression élevée d'air ou d'eau dans le passage de roue (5).

2. Structure selon la revendication 1, **caractérisée en ce que** l'écope (8) s'étend à partir du flanc intérieur du pneumatique de la roue (4) du véhicule suivant une direction générale sensiblement perpendiculaire à ce flanc intérieur.

3. Structure selon la revendication 2, **caractérisée en ce que** l'écope (8) comprend une paroi plane (9) inclinée vers l'arrière du véhicule et vers le bas d'un angle aigu relativement à un plan vertical perpendiculaire au flanc intérieur du pneumatique et deux parois latérales (11) raccordées à la paroi plane arrière (9) pour définir avec cette dernière une forme sensiblement en U débouchant vers le bas.

4. Structure selon la revendication 3, **caractérisée en ce que** les deux parois latérales (11) divergent l'une de l'autre à partir de la paroi plane (9).

5. Structure selon la revendication 3 ou 4, **caractérisée en ce que** la paroi plane inclinée (9) de l'écope (8) a son bord inférieur (10) sensiblement horizontal en s'étendant suivant une direction sensiblement perpendiculaire au flanc du pneumatique de la roue (4) du véhicule et son bord supérieur (12) incliné de bas en haut à partir de ce flanc.

6. Pare-boue pour véhicule, tel qu'un véhicule automobile, destiné à être fixé dans un passage de roue (5) délimité dans une structure d'aile du véhicule, le pare-boue (6) comprenant une paroi généralement semi-cylindrique (7) comprenant à l'une (7a) de ses parties d'extrémités (7a,7b) une écope (8) conformée pour assurer l'évacuation d'eau ou d'air lorsque le pare-boue (6) est fixé dans le passage de roue (5), **caractérisé en ce que** le pare-boue (6) est réalisé en un matériau souple élastomère à base de polypropylène ou à base de polypropylène et de caoutchouc éthylène-propylène-diène, permettant à l'écope (8) de se déformer élastiquement.

7. Pare-boue selon la revendication 6, **caractérisé en ce que** l'écope (8) comprend une paroi plane (9) inclinée extérieurement d'un angle aigu relativement à la partie d'extrémité (7a) de la paroi (7) du pare-boue (6) et délimitant un bord (10) de cette partie d'extrémité (7a), et deux parois latérales (11) raccordées à la paroi plane inclinée (9) pour définir avec cette dernière une forme générale en U.

8. Pare-boue selon la revendication 7, **caractérisé en ce que** les deux parois latérales (11) divergent l'une de l'autre à partir de la paroi plane (9).

9. Pare-boue selon la revendication 7 ou 8, **caractérisé en ce que** le bord (10) de la paroi plane inclinée (9) de l'écope (8) s'étend suivant une direction sensiblement perpendiculaire à un plan traversant la paroi semi-cylindrique (7) du pare-boue (6) perpendiculairement aux deux parois d'extrémités (7a,7b), t l'écope (8) comporte un bord opposé (12) incliné de bas en haut à partir de ce plan, et est réalisée en un matériau souple élastomère à base de polypropylène ou à base de polypropylène et de caoutchouc éthylène-propylène-diène.

## Patentansprüche

1. Flügelstruktur eines Kraftfahrzeugs, wie eines Kraftfahrzeugs, die einen Raddurchgang (5) begrenzt, in dem eine Blende (6) befestigt ist, deren Rolle im Wesentlichen parallel zum Rad (4) ist, wobei die Blende (6) am hinteren unteren Teil (7a) der Blende eine Blende (8) aufweist, die zur Erzeugung eines Ablassbereichs für Wasser oder Überdruckluft im Durchgang ausgebildet ist Rad (5) hinter der Blende (6) unter dem Unterteil des Fahrzeugs, **dadurch gekennzeichnet, dass** die Blende (6) aus einem elastischen Elastomermaterial auf der Basis von Polypropylen oder auf der Basis von Polypropylen und Ethylen-Propylen-Dien-Kautschuk besteht, das es der Blende (8) ermöglicht, sich bei erhöhtem Luft- oder Wasserdruck elastisch zu verformen, um an einem umgebenden Umlaufenden Teil des Fahrzeugaufbaus anzuliegen Raddurchgang (5).

2. Struktur nach Anspruch 1, **dadurch gekennzeichnet, dass** sich die Schale (8) von der Innenseite des Reifens des Fahrzeugrades (4) in einer Richtung im Wesentlichen senkrecht zu dieser Innenseite erstreckt.

3. Struktur nach Anspruch 2, **dadurch gekennzeichnet, dass** die Schale (8) eine ebene Wand (9) aufweist, die nach hinten und unten um einen spitzen Winkel zu einer vertikalen Ebene senkrecht zur Innenseite des Reifens geneigt ist, und zwei Seitenwände (11), die mit der hinteren ebenen Wand (9) verbunden sind, um mit dieser eine nach unten mündende U-förmige Form zu definieren.

4. Struktur nach Anspruch 3, **dadurch gekennzeichnet, dass** die beiden Seitenwände (11) von der ebenen Wand (9) voneinander abweichen.

5. Struktur nach Anspruch 3 oder 4, **dadurch gekennzeichnet, dass** die geneigte ebene Wand (9) des Schuhs (8) ihren unteren, im Wesentlichen horizontalen Rand (10) aufweist, der sich in einer Richtung im Wesentlichen senkrecht zur Seitenwand des Fahrzeugrades (4) erstreckt, und seinen oberen Rand (12) von unten nach oben von dieser Seitenwand geneigt ist.

6. Fahrzeugblende, wie ein Kraftfahrzeug, zur Befestigung in einem in einer Flügelstruktur des Fahrzeugs begrenzten Raddurchgang (5), wobei die Blende (6) eine im Allgemeinen halbzylindrische Wand (7) aufweist, die an einem (7a) ihrer Endabschnitte (7a, 7b) eine Schürze (8) aufweist, die so ausgebildet ist, dass sie beim Verlassen der Scheibe Wasser- oder Luft abgibt Aufschlämmung (6) ist im Raddurchgang (5) befestigt, **dadurch gekennzeichnet, dass** die Aufschlämmung (6) aus einem elastischen Elastomer-Weichmaterial auf der Basis von Polypropylen oder auf der Basis von Polypropylen und Ethylen-Propylen-Dien-Kautschuk besteht, wodurch die Aufschlämmung (8) elastisch verformbar ist.

7. Kotflügel nach Anspruch 6, **dadurch gekennzeichnet, dass** der Kotflügel (8) eine ebene Wand (9) aufweist, die außen um einen spitzen Winkel bezüglich des Endabschnitts (7a) der Wand (7) des Kotflügels (6) geneigt ist und einen Rand (10) dieses Endabschnitts (7a) begrenzt, und zwei mit der geneigten ebenen Wand (9) verbundene Seitenwände um mit dieser eine allgemeine U-Form zu definieren.

8. Kotflügel nach Anspruch 7, **dadurch gekennzeichnet, dass** die beiden Seitenwände (11) von der ebenen Wand (9) voneinander abstehen.

9. Kotflügel nach Anspruch 7 oder 8, **dadurch gekennzeichnet, dass** der Rand (10) der geneigten ebenen Wand (9) des Schuhs (8) sich in einer Richtung im Wesentlichen senkrecht zu einer Ebene erstreckt, die die halbzylindrische Wand (7) des Kotflügels (6) senkrecht zu den beiden Endwänden (7a, 7b) durchdringt, und dass der Kotflügel (8) einen geneigten gegenüberliegenden Rand (12) aufweist unten von dieser Ebene und aus einem elastischen elastomeren Material auf der Basis von Polypropylen oder Polypropylen und Ethylen-Propylen-Dien-Kautschuk hergestellt.

## Claims

1. Wing structure of a vehicle, such as a motor vehicle, marking a wheel passage (5) in which a mudshield (6) is attached with a blade that is substantially parallel to the wheel (4), mudguard (6) comprising a bucket (8) in the lower rear (7a) of the blade to create a water or pressure air discharge zone in the wheel wheel passage (5) in the rear of the mudshield (6) under the undercarriage of the vehicle, **characterized by** the mudshield (6) being made of flexible polypropylene-based or polypropylene-based elastomeric material and ethylene-propylene-diene rubber, allowing the scoop (8) to deform elastically to support an surrounding part of the vehicle body in case High air or water pressure in the wheel passage (5).

2. Structure according to Claim 1, characterized as the shell (8) extends from the inside flank of the tire of the wheel (4) of the vehicle in a general direction substantially perpendicular to that inner flank.

3. Structure according to Claim 2, characterized as the shell (8) consists of a flat wall (9) inclined towards the rear of the vehicle and towards the bottom of an acute angle relative to a vertical plane perpendicular to the inside flank of the tire and two lateral walls (11) connected to the rear flat wall (9) to define with the rear flat wall a shape substantially in U leading downwards.

4. Structure according to Claim 3, characterized as the two side walls (11) diverge from each other from the flat wall (9).

5. Structure according to claim 3 or 4, characterized as the flat sloped wall (9) of the shell (8) has its lower edge (10) substantially horizontal extending in a direction substantially perpendicular to the tire side of the wheel (4) of the vehicle and its upper edge (12) sloped from the bottom to the top from that side.

6. Vehicle mudflap, such as a motor vehicle, intended to be attached in a wheel passage (5) delimited in a vehicle wing structure, mudflaw (6) consisting of a generally semi-cylindrical wall (7) consisting of one (7a) of its parts at the ends (7a,7b) a scoop (8) conformed to ensure the discharge of water or air when the mud barrier (6) is attached in the wheel passage (5), **characterized by** the mud barrier (6) being made of an elastomeric flexible material based on polypropylene or polypropylene and ethylene propylene-diene rubber, allowing the scoop (8) to develop elastically.

7. Sludge barrier according to claim 6, characterized as the squid (8) consists of a flat wall (9) inclined externally from an acute angle relative to the end part (7a) of the wall (7) of the squid wall (6) and delimiting one edge (10) of that end part (7a), and two side walls (11) connected to the flat wall ea (9) to define with it a general U shape.

8. Mud barrier according to Claim 7, characterized as the two side walls (11) diverge from each other from the flat wall (9).

9. Sludge barrier according to claim 7 or 8, characterized as the edge (10) of the sloped flat wall (9) of the shell (8) extends in a direction substantially perpendicular to a plane passing through the semi-cylindrical wall (7) of the mud wall (6) perpendicular to the two end walls (7a,7b), and the shell (8) has an opposite edge (1 2) inclined from the top from this plane, and is made of flexible elastomeric material based on polypropylene or based on polypropylene and ethylene-propylene-diene rubber.
